(19) Europäisches Patentamt
European Patent Office
Office européen des brevets

(11) EP 1 953 052 B1

(12) **FASCICULE DE BREVET EUROPEEN**

(45) Date de publication et mention
de la délivrance du brevet:
**21.08.2013 Bulletin 2013/34**

(51) Int Cl.:
**B60T 8/172** (2006.01)    **G01N 19/02** (2006.01)

(21) Numéro de dépôt: **08100902.9**

(22) Date de dépôt: **24.01.2008**

(54) **Procédé de quantification d'une utilisation d'un potentiel d'adhérence maximal d'un pneumatique**

Verfahren zur Quantifizierung der Verwendung einer potenziellen maximalen Bodenhaftung eines Reifens

Method of quantifying a use of the maximum grip potential of a tyre

(84) Etats contractants désignés:
**DE FR IT**

(30) Priorité: **02.02.2007 FR 0753025**

(43) Date de publication de la demande:
**06.08.2008 Bulletin 2008/32**

(73) Titulaires:
• **COMPAGNIE GENERALE DES ETABLISSEMENTS MICHELIN**
**63000 Clermont-Ferrand (FR)**
• **Michelin Recherche et Technique S.A.**
**1763 Granges-Paccot (CH)**

(72) Inventeurs:
• **Bertrand, David**
**25000, Besancon (FR)**
• **Rehab, Hichem**
**63400 Chamalieres (FR)**

(74) Mandataire: **Dequire, Philippe Jean-Marie Denis et al**
**M.F.P. Michelin**
**23, place des Carmes-Déchaux**
**DGD/PI - F35 - Ladoux**
**63040 Clermont-Ferrand Cedex 09 (FR)**

(56) Documents cités:
**WO-A-2006/010680    US-A1- 2004 158 414**
**US-A1- 2005 065 699**

## Description

La présente invention concerne un procédé de quantification d'une utilisation d'un potentiel d'adhérence maximal d'un pneumatique en roulage sur un sol ainsi qu'un pneumatique.

On rappelle que le potentiel d'adhérence $\mu$ d'un pneumatique est défini, à un instant donné, comme étant le rapport de la résultante des efforts longitudinaux et latéraux sur la résultante des efforts verticaux :

$$\mu = \frac{\sqrt{F_x^2 + F_y^2}}{F_z}.$$

On définit également, à un instant donné, le potentiel d'adhérence maximal $\mu_{max}$ du pneumatique sur le sol comme étant la valeur maximale que le potentiel d'adhérence $\mu$ peut prendre. Ce potentiel d'adhérence maximal $\mu_{max}$ dépend de plusieurs facteurs dont la nature du sol (de la chaussée) ou son état d'usure, la température du sol et du pneumatique, ou encore de facteurs météorologiques impliquant, par exemple, la présence d'eau ou de neige sur le sol.

Le pourcentage d'utilisation $P_u$ du potentiel d'adhérence maximal $\mu_{max}$ du pneumatique est alors défini par la formule suivante :

$$P_u = \frac{\mu}{\mu_{max}}.100$$

Ce pourcentage d'utilisation Pu correspond au pourcentage que représente le potentiel d'adhérence réellement utilisé par rapport au potentiel d'adhérence maximal. Cette valeur varie entre 0 et 100 %. Bien entendu, plus cette valeur est proche de 100 % et plus le risque de perte d'adhérence du pneumatique est grand. Ainsi, le pourcentage d'utilisation $P_u$ permet de quantifier l'utilisation du potentiel d'adhérence maximal.

Il est intéressant de quantifier en temps réel l'utilisation du potentiel d'adhérence maximal de chaque pneumatique d'un véhicule automobile pour déterminer si l'un des pneumatiques est proche ou non de perdre son adhérence sur le sol. Cette information concernant l'adhérence du pneumatique peut être transmise au conducteur du véhicule, pour qu'il adapte sa conduite en conséquence, ou à un dispositif électronique de contrôle de la tenue de route du véhicule.

Il est connu du document WO 03/066400 que le potentiel d'adhérence maximal $\mu_{max}$ d'un pneumatique dépend notamment des paramètres suivants :

- l'effort moteur ou freineur appliqué sur le pneumatique,
- l'effort de poussée latérale appliqué sur le pneumatique,
- la charge portée par le pneumatique,
- le couple d'auto-alignement, c'est-à-dire le moment autour de l'axe vertical exercé par le pneumatique.

Ces différents paramètres d'effort peuvent être mesurés au moyen de capteurs portés par le pneumatique, notamment au moyen de capteurs mesurant les efforts subis par les flancs ou les bourrelets du pneumatique.

Le potentiel d'adhérence maximal peut être déduit de ces mesures d'effort à l'aide d'une fonction d'approximation par apprentissage, par exemple par apprentissage des poids d'un réseau de neurones.

Ce procédé d'estimation connu s'avère particulièrement complexe à mettre en oeuvre et nécessite une calibration compliquée du pneumatique ainsi qu'un suivi précis de l'évolution des paramètres au cours du temps. Il en résulte que cette méthode est dans la pratique coûteuse à mettre en oeuvre.

L'invention a notamment pour but de proposer un procédé de quantification de l'utilisation d'un potentiel d'adhérence maximal d'un pneumatique en roulage sur un sol qui soit particulièrement simple à mettre en oeuvre.

A cet effet, l'invention a pour objet un procédé selon la revendication 1.

Grâce à l'invention, on quantifie l'utilisation du potentiel d'adhérence maximal du pneumatique d'une manière particulièrement simple et rapide. En effet, les valeurs utilisées pour cette estimation sont très facilement mesurables au moyen d'un capteur classique intégré sur la bande de roulement du pneumatique, et la fonction de quantification utilise des opérateurs algébriques simples tels que l'addition ou la division. En outre, ce procédé permet d'obtenir directement une valeur quantifiant l'utilisation, sans avoir besoin de calculer au préalable le potentiel d'adhérence maximal du pneumatique ce qui réduit considérablement les ressources nécessaires à cette quantification.

La valeur de ce quotient est directement reliée à l'utilisation du potentiel d'adhérence maximal. Ce calcul, qui est particulièrement rapide, permet donc d'obtenir une valeur qui peut être interprétée très facilement, puisqu'elle varie entre 0 et 1.

Un procédé de quantification selon l'invention peut en outre comprendre l'une ou plusieurs des caractéristiques suivantes.

- Les deux azimuts définissent un secteur angulaire aigu comprenant l'aire de contact de la bande de roulement avec le sol. Les déformations du pneumatique sont essentiellement dues au contact avec le sol. Par conséquent, il est préférable que les valeurs d'extension ou de cisaillement utilisées pour la quantification de l'utilisation soient déterminées pour des azimuts proches de l'aire de contact de sorte que ces valeurs sont influencées par le contact du pneumatique avec le sol et donc par les conditions d'adhérence du pneumatique.
- Le secteur angulaire est de l'ordre de 50 degrés. La quantification est de meilleure qualité si les valeurs sont mesurées en dehors de l'aire de contact (pour ne pas subir l'influence de l'état de surface de la chaussée), et le plus proche possible de l'aire de contact (pour maximiser l'influence des conditions d'adhérence du pneumatique sur le sol). Il a été déterminé qu'un secteur angulaire de l'ordre de 50 degrés, centré sur l'aire de contact, était optimal pour répondre à ces deux critères.
- Dans la formule précédente, $P_{glis} = 0$. Généralement, $P_{glis}$ peut être négligé ce qui simplifie la formule de calcul de S.
- La quantification de l'utilisation est en outre fonction d'une longueur de l'aire de contact de la bande de roulement avec le sol.
- Les valeurs déterminées étant des valeurs de cisaillement, on détermine chaque valeur de cisaillement de la bande de roulement, sensiblement dans un plan équatorial du pneumatique.
- L'extension différentielle correspond à la différence entre deux valeurs d'extension de la bande de roulement mesurées sensiblement symétriquement par rapport à un plan équatorial du pneumatique.
- Les valeurs d'extensions mesurées sont des valeurs d'extension selon une direction sensiblement circonférentielle au pneumatique.
- On détermine l'extension ou le cisaillement de la bande de roulement respectivement au moyen d'au moins un capteur d'extension ou de cisaillement, de préférence implanté entre une nappe carcasse et une gomme intérieure du pneumatique ou sur une face de la gomme intérieure en contact avec l'air intérieur au pneumatique.

Dans l'état de la technique, les pneumatiques sont équipés de capteurs d'efforts disposés sur chacun de leurs flancs. Pour leur alimentation, il est nécessaire de disposer des fils à l'intérieur du pneumatique, reliant les deux flancs entre eux. Grâce à l'invention, les deux capteurs sont disposés sur la bande de roulement. Il est ainsi possible d'intégrer les deux capteurs au sein d'un unique module disposé sur la bande de roulement et dont l'alimentation électrique est entièrement intégrée.

L'invention sera mieux comprise à la lecture de la description qui va suivre, donnée uniquement à titre d'exemple et faite en se référant aux dessins dans lesquels :

- la figure 1 est un schéma en perspective d'un pneumatique, muni de deux capteurs d'extension,
- les figures 2 et 3 sont des graphiques représentant, en fonction d'un effort latéral, les évolutions respectives de $\Delta e + \Delta s$ et $\Delta s - \Delta e$,
- les figures 4 et 5 sont des graphiques représentant l'évolution de $\Delta s - \Delta e$ en fonction de $\Delta s + \Delta e$,
- les figures 6 et 7 représentent respectivement l'évolution de $\Delta s + \Delta e$ et $\Delta s - \Delta e$, en fonction de l'effort latéral, pour différentes charges verticales,
- la figure 8 représente l'évolution de la longueur de l'aire de contact en fonction de la flèche du pneumatique,
- les figures 9 et 10 sont des graphiques représentant l'évolution des paramètres P et O en fonction de la longueur de l'aire de contact,
- la figure 11 représente l'évolution des valeurs de $\Delta s + \Delta e$ et de $\Delta s - \Delta e$ dans le cas où un couple moteur est appliqué au pneumatique,
- la figure 12 est un graphique des signaux fournis par les deux capteurs d'extension, dans des conditions normales d'utilisation,
- les figures 13 et 14 sont respectivement un schéma d'un pneumatique soumis à un effort vertical et un graphique des signaux fournis par les capteurs d'extension du pneumatique,
- les figures 15 et 16 sont respectivement un schéma d'un pneumatique soumis à un couple moteur et un graphique des signaux fournis par les capteurs d'extension du pneumatique,
- les figures 17 et 18 sont respectivement un schéma d'un pneumatique soumis à un effort de dérive et un graphique des signaux fournis par les capteurs d'extension du pneumatique,

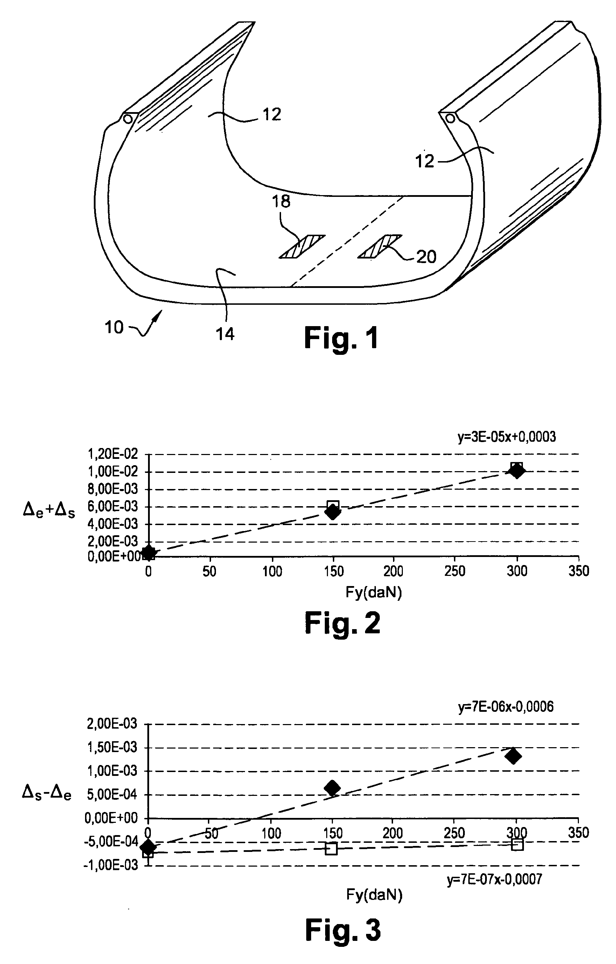

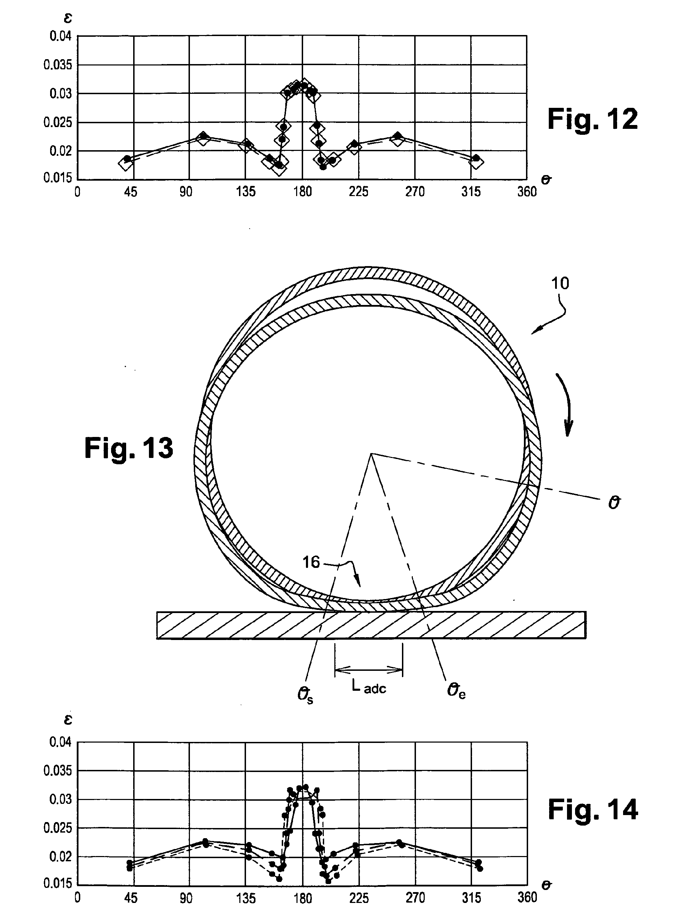

On a représenté sur la figure 1 un pneumatique, désigné par la référence générale 10, comprenant deux flancs 12 et une bande de roulement 14. La partie de la bande de roulement 14 en contact avec le sol est appelée aire de contact 16. L'aire de contact 16 est visible sur la figure 13 qui sera décrite par la suite.

Le pneumatique 10 est muni de deux capteurs d'extension 18 et 20 agencés sur la bande de roulement 14, de manière à mesurer l'extension de la bande de roulement en deux points selon une direction sensiblement circonférentielle au pneumatique.

Les deux capteurs d'extension 18 et 20 sont positionnés, relativement au pneumatique 10, en un même azimut. Comme cela est représenté sur la figure 1, les deux capteurs 18 et 20 sont disposés sensiblement symétriquement par rapport à un plan équatorial du pneumatique 10, par exemple à 30 mm de ce plan. Cette dernière caractéristique est cependant optionnelle pour la mise en oeuvre de l'invention.

On considère un pneumatique en rotation. A un instant donné, on note θ l'azimut auquel se trouvent les deux capteurs 18 et 20 par rapport à un référentiel externe au pneumatique. L'azimut θ = 180° correspond au passage des capteurs 18 et 20 à la verticale inférieure de l'axe de rotation du pneumatique.

Pour un azimut θ donné, on définit une extension différentielle Δ(θ) de la manière suivante :

$$\Delta(\theta) = \varepsilon_1(\theta) - \varepsilon_2(\theta)$$

La valeur Δ(θ) correspond à la différence entre les extensions ε mesurées par les deux capteurs d'extension 18 et 20. Elle est donc représentative de l'état de la flexion sur chant de la bande de roulement 16, à l'azimut θ.

On note $\theta_e$ et $\theta_s$ deux azimuts définissant un secteur angulaire aigu comprenant l'aire de contact 16 de la bande de roulement 14 avec le sol. L'azimut $\theta_e$ est choisi en entrée de l'aire de contact et l'azimut $\theta_s$ est choisi en sortie de l'aire de contact. Les valeurs choisies sont par exemple $\theta_e$ = 156° et $\theta_s$ = 204° de sorte que le secteur angulaire est de l'ordre de 50°.

Dans la suite de la description, on considère un pneumatique en roulage sur le sol soumis à deux types de sollicitations.

- Un premier type de sollicitation correspondant à un roulage normal sur un sol parfaitement adhérent. Cette sollicitation est nommée "sollicitation adhérente".
- Un second type de sollicitation correspondant à un roulage sur un sol dont les caractéristiques sont choisies telles que les efforts générés correspondent à la limite d'adhérence. Cette sollicitation est nommée "sollicitation glissante".

Ces deux sollicitations correspondent à des cas extrêmes et la plupart des sollicitations réelles rencontrées sont intermédiaires.

On s'intéresse par la suite plus particulièrement aux valeurs $\Delta_e = \Delta(\theta_e)$, $\Delta_s = \Delta(\theta_S)$, $\Delta_e + \Delta_s$ et $\Delta_s - \Delta_e$, et à leur évolution en fonction des efforts appliqués sur le pneumatique 10, dans trois cas.

1$^{er}$ cas : pneumatique soumis uniquement à un effort latéral Fy et à une charge verticale constante.

La figure 2 est un graphique représentant les valeurs de $\Delta_e + \Delta_s$ pour une charge donnée en fonction de la poussée latérale Fy. Sur ces figures, les losanges pleins correspondent à une sollicitation adhérente et les carrés à une sollicitation glissante. Il ressort de l'analyse de ce graphique que, indépendamment du type de sollicitation, il existe une relation simple de type affine entre $\Delta_e + \Delta_s$ et la valeur de la poussée latérale Fy.

La figure 3 présente les valeurs de $\Delta_s - \Delta_e$, pour une charge donnée en fonction de la poussée latérale $F_y$. On constate qu'une relation affine existe entre les deux grandeurs, dans chacune des sollicitations adhérente ou glissante, mais que le coefficient directeur de cette relation dépend du type de sollicitation.

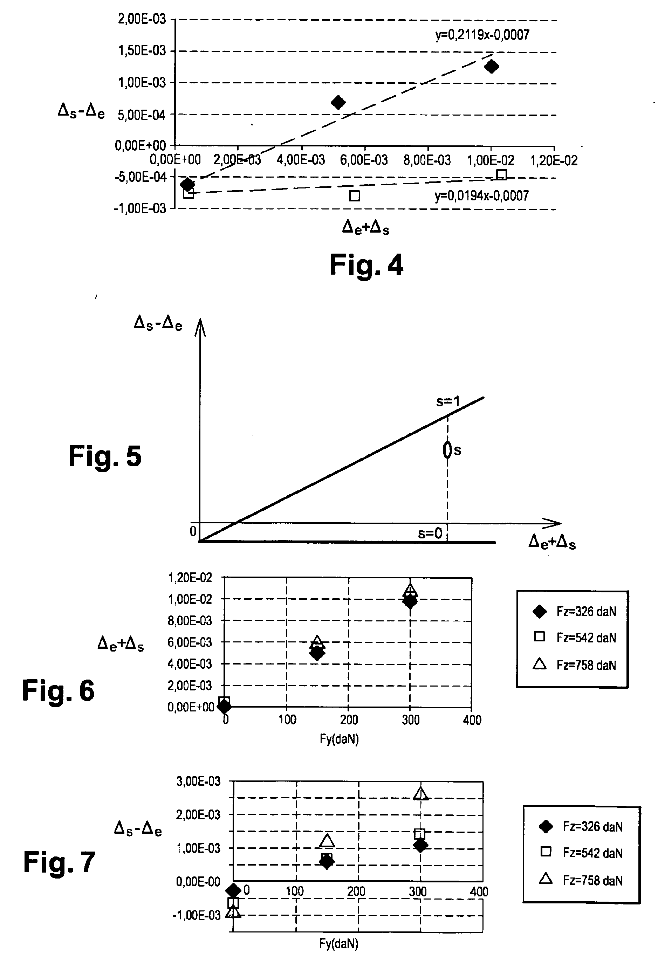

En réunissant les résultats donnés par les figures 2 et 3, on peut former la figure 4 mettant en évidence la relation entre $\Delta_s - \Delta_e$ et $\Delta_e + \Delta_s$ selon chaque type de sollicitation. On constate que, pour une sollicitation donnée, ces deux valeurs sont reliées par un coefficient de proportionnalité. Cela est symbolisé par les deux droites tracées sur la figure 4.

Lors d'une sollicitation réelle, les points représentant les couples $(\Delta_e + \Delta_s, \Delta_s - \Delta_e)$ évoluent dans l'espace qui sépare les deux droites représentées sur la figure 4 et qui correspondent aux deux sollicitations extrêmes. On définit alors une valeur S de façon à ce que :

- S = 0 lorsque le point correspondant au couple courant est situé sur la droite représentant la sollicitation glissante,
- S = 1 lorsque le point correspondant au couple courant est situé sur la droite représentant la sollicitation adhérente.

S peut alors s'écrire de la façon suivante :

$$S = \frac{(\Delta_s - \Delta_e) - (\Delta_s - \Delta_e)_{gli}}{(\Delta_s - \Delta_e)_{adh} - (\Delta_s - \Delta_e)_{gli}}$$

En notant O l'ordonnée à l'origine des deux droites, $P_{adh}$ la pente de la droite correspondant à la sollicitation adhérente et $P_{gli}$ la pente correspondant à la sollicitation glissante, l'expression de S devient :

$$S = \frac{(\Delta_s - \Delta_e) - O - P_{glis}.(\Delta_s + \Delta_e)}{(P_{adh} - P_{glis}).(\Delta_s + \Delta_e)}$$

Dans une version simplifiée dans laquelle on néglige la pente $P_{gli}$, on obtient l'expression suivante :

$$S = \frac{(\Delta_s - \Delta_e) - O}{P_{adh}.(\Delta_e + \Delta_s)}$$

Ainsi, le calcul de S, et sa comparaison par rapport aux valeurs 0 et 1 permet de déterminer si la sollicitation du pneumatique est plus proche d'une sollicitation d'adhérence parfaite ou d'une sollicitation glissante et de quantifier cette proximité. On peut donc quantifier l'utilisation du potentiel d'adhérence maximal du pneumatique en roulage sur le sol grâce au calcul de la valeur S.

En résumé, le calcul de la valeur S consiste à déterminer au moins deux valeurs $\Delta_e$ et $\Delta_s$ d'une extension différentielle de la bande de roulement du pneumatique, en deux azimuts $\theta_e$ et $\theta_s$ distincts, et à calculer la valeur de S pour quantifier l'utilisation du potentiel maximal.

<u>2<sup>éme</sup> cas : pneumatique soumis en outre à des variations de charge.</u>

Le raisonnement qui vient d'être fait prenait pour hypothèse que le pneumatique était uniquement soumis à une charge verticale donnée et à un effort de poussée latérale.

Dans la réalité, la charge portée par le pneumatique varie à chaque instant. Il est donc nécessaire de prendre en compte les variations de charge portée dans la méthode de calcul de la valeur S en vue d'améliorer le modèle.

Les figures 6 et 7 présentent les effets de la variation de la charge portée par le pneumatique sur les valeurs de $\Delta_e + \Delta_s$ et $\Delta_s - \Delta_e$. La variation de la charge et donc de la flèche n'a pas d'effet notable sur le lien entre $\Delta_e + \Delta_s$ et la poussée latérale (figure 6). En revanche, la figure 7 met en évidence une influence de la charge sur le lien entre $\Delta_s - \Delta_e$ et la poussée latérale.

De manière à introduire une correction de la relation affine qui relie $\Delta_s - \Delta_e$ à $\Delta_e + \Delta_s$ en fonction de la flèche du pneumatique, on définit un critère permettant d'estimer la longueur de l'aire de contact. Cette valeur permettra de paramétrer la pente $P_{adh}$ et l'ordonnée à l'origine O.

On définit alors une valeur $\Sigma(\theta)$ de la façon suivante :

$$\Sigma(\theta) = \varepsilon_1(\theta) + \varepsilon_2(\theta)$$

La valeur $\Sigma(\theta)$ est caractéristique du rayon de courbure de la bande de roulement. En effet, lorsque le rayon de courbure augmente, les signaux des deux capteurs d'extension augmentent tous deux d'une même valeur. Par conséquent, au cours d'un tour de roue, la valeur de $\Sigma(\theta)$ présente deux points caractéristiques $\theta_e$ et $\theta_s$ correspondant respectivement à l'entrée et à la sortie des capteurs dans l'aire de contact. On définit alors un critère caractéristique de la longueur de l'aire de contact de la manière suivante : $L_{adc} = \theta_s - \theta_e$. Dans ce cas, le critère est exprimé en degrés et non pas en mètres.

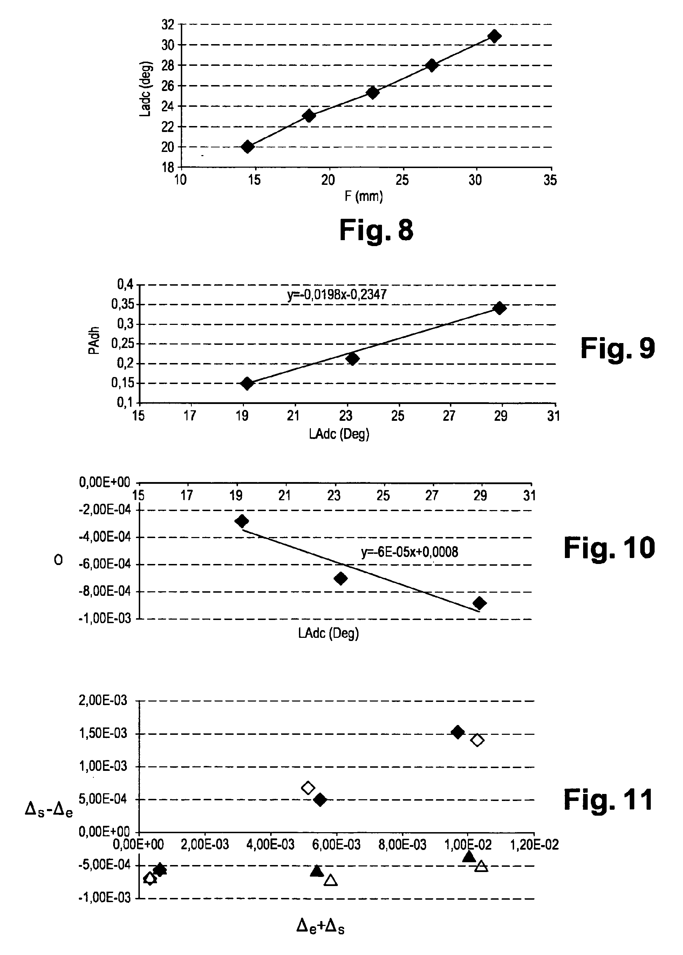

On a représenté sur la figure 8 l'évolution de la longueur de l'aire de contact en fonction de la flèche d'un pneumatique obtenue pour différentes charges. La longueur de l'aire de contact est manifestement proportionnelle à la flèche.

Les figures 9 et 10 représentent l'évolution de P_adh et O en fonction de L_adc tel que défini précédemment. Ces deux graphiques mettent en évidence qu'il est possible de relier P_adh et O de manière simple à L_adc, par exemple de manière affine. On définit donc P_adh et O de la manière suivante :

$$P_{adh} = a_p L_{adc} + b_p$$

$$O = a_o L_{adc} + b_o$$

Bien entendu, la longueur de l'aire de contact peut être mesurée à l'aide d'autres données que celles fournies par les capteurs de d'extension.

3^ème cas : pneumatique soumis en outre à un couple moteur ou freineur.

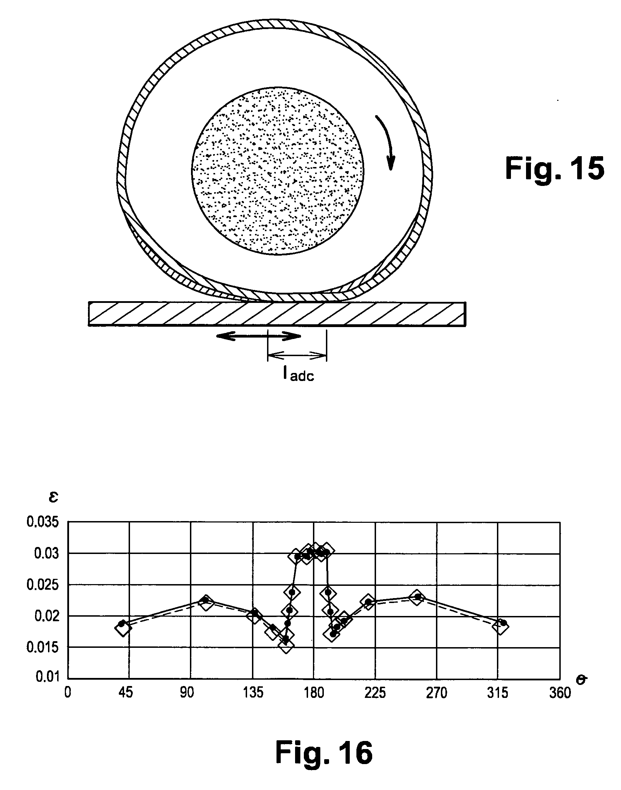

Lors de l'utilisation sur un véhicule, le pneumatique est aussi chargé de transmettre un couple moteur ou freineur. A ce titre, il subit des déformations qui sont susceptibles d'interagir avec le fonctionnement précédemment évoqué. Comme cela sera montré en décrivant les figures 15 et 16, l'effet du couple moteur ou freineur se traduit par une différenciation de l'entrée et de la sortie de l'aire de contact.

La figure 11 représente la variabilité des valeurs $\Delta_e + \Delta_s$ et $\Delta_s - \Delta_e$ dans un cas sans couple moteur (marqueurs vides) et dans un cas avec un couple moteur de l'ordre de 45 m.daN (marqueurs pleins). On constate une très faible sensibilité du modèle aux effets générés par un couple moteur ou freineur. Ainsi, le modèle précédemment décrit n'a pas besoin d'être modifié pour tenir compte des effets du couple moteur.

La description qui vient d'être faite du procédé de l'invention montre donc que la détermination de la valeur S permet de quantifier de manière particulièrement satisfaisante l'utilisation du potentiel d'adhérence maximal du pneumatique. Cette détermination tient compte des différents efforts appliqués sur le pneumatique, notamment l'effort de poussée latérale, de la charge verticale, ainsi que des couples moteur et freineur. En outre, la valeur de S peut également varier légèrement en fonction de la pression de gonflage du pneumatique et de son angle de carrossage.

On notera que la description précédente utilisait la détermination d'une extension différentielle au moyen de deux capteurs d'extension portés par la bande de roulement du pneumatique. Cependant, on ne sort pas du cadre de l'invention lorsqu'on utilise un unique capteur de cisaillement disposé dans le plan équatorial du pneumatique pour déterminer un cisaillement de la bande de roulement. En effet, le cisaillement dans le plan équatorial du pneumatique est homogène à l'extension différentielle $\Delta(\theta)$. Par conséquent, les formules de calcul de la valeur de S restent valables dans le cas de la détermination d'un cisaillement puisqu'il suffit de remplacer la valeur d'extension différentielle $\Delta(\theta)$ par une valeur de cisaillement mesurée au moyen d'un capteur de cisaillement.

Exemples de signaux fournis par les capteurs d'extension.

A titre d'illustration, on montrera dans la suite de la description la façon dont un pneumatique se déforme lorsqu'il est soumis à différents efforts. On montrera également l'influence de ces différentes déformations sur les signaux fournis par les deux capteurs d'extension portés par la bande de roulement du pneumatique.

On considère le pneumatique représenté sur la figure 1 et muni des deux capteurs d'extension 18 et 20 positionnés respectivement à + 30 mm et - 30 mm du plan équatorial du pneumatique. Lorsque les capteurs mesurent une extension, la valeur du signal augmente et lorsqu'ils mesurent une compression, la valeur du signal diminue.

La figure 12 représente les signaux générés par les deux capteurs sur un tour de roue (c'est-à-dire au cours d'une rotation de 360°) dans le cas où le pneumatique est soumis à une charge verticale de 542 daN. Le signal fourni par le premier capteur est représenté par des points et par une ligne continue et le signal fourni par le second capteur est représenté par des losanges et par une ligne discontinue.

On constate que les signaux fournis par les deux capteurs sont sensiblement identiques. En effet, ces deux signaux ne diffèrent que par les effets de non isotropie des matériaux constitutifs du pneumatique.

On constate que, au voisinage de l'azimut 180°, les signaux fournis par les capteurs augmentent. Cela est dû au passage des capteurs dans l'aire de contact du pneumatique avec le sol. En effet, lorsque la bande de roulement entre en contact avec le sol, elle se déforme et son rayon de courbure augmente. En réalité, son rayon de courbure tend vers l'infini puisque la bande de roulement s'aplatit. Alors, cette augmentation du rayon de courbure provoque un étirement de la bande de roulement et donc des capteurs d'extension.

Cet écrasement de l'aire de contact est représenté sur la figure 13 qui représente deux pneumatiques, l'un (en grisé) qui n'est soumis à aucune charge verticale et l'autre (en noir) qui est soumis à une charge verticale. La déformation de la bande de roulement crée une aire de contact (16) d'une longueur $L_{adc}$.

Plus l'effort vertical appliqué sur le pneumatique est important, plus le pneumatique s'écrase et donc plus la longueur de l'aire de contact augmente. La figure 14 présente l'effet d'une variation de flèche sur l'allure des signaux mesurés. La variation de flèche est obtenue en faisant varier la charge verticale. La figure 14 représente l'évolution d'un signal fourni par un capteur au cours d'une rotation du pneumatique, pour trois valeurs de charge données : la courbe continue correspond à une charge de 326 daN, la courbe en pointillés à une valeur de charge de 542 daN et la courbe en trait mixte à une valeur de charge de 758 daN.

On peut constater, grâce à ces signaux, que la longueur de la zone correspondant à l'aire de contact augmente lorsque la flèche augmente. On constate également que les valeurs de signal en entrée et en sortie de l'aire de contact sont d'autant plus faibles que la flèche est grande, ce qui signifie que le rayon de courbure est plus petit.

Les figures 15 et 16 représentent l'effet d'un couple moteur sur le pneumatique et sur les signaux fournis par les capteurs d'extension.

On constate sur la figure 15 que, lorsque le pneumatique est soumis à un couple moteur, l'aire de contact de la bande de roulement avec le sol se déplace vers l'avant.

Ce déplacement peut également être déduit du graphique de la figure 16 représentant l'évolution des signaux fournis par les capteurs lorsque le pneumatique est en outre soumis à un couple moteur générant un effort longitudinal de 150 daN. On constate sur ce graphique que la présence d'un couple moteur se traduit par les effets suivants.

- Une diminution de l'extension mesurée en entrée de l'aire de contact et une augmentation de l'extension mesurée en sortie de l'aire de contact. Cela traduit une diminution du rayon de courbure en entrée de l'aire de contact et une augmentation du rayon de courbure en sortie de l'aire de contact, comme cela est visible sur la figure 15.
- Un léger déplacement de la zone correspondant à l'aire de contact vers l'avant (c'est-à-dire vers les azimuts les plus faibles), ce qui correspond au déport longitudinal.

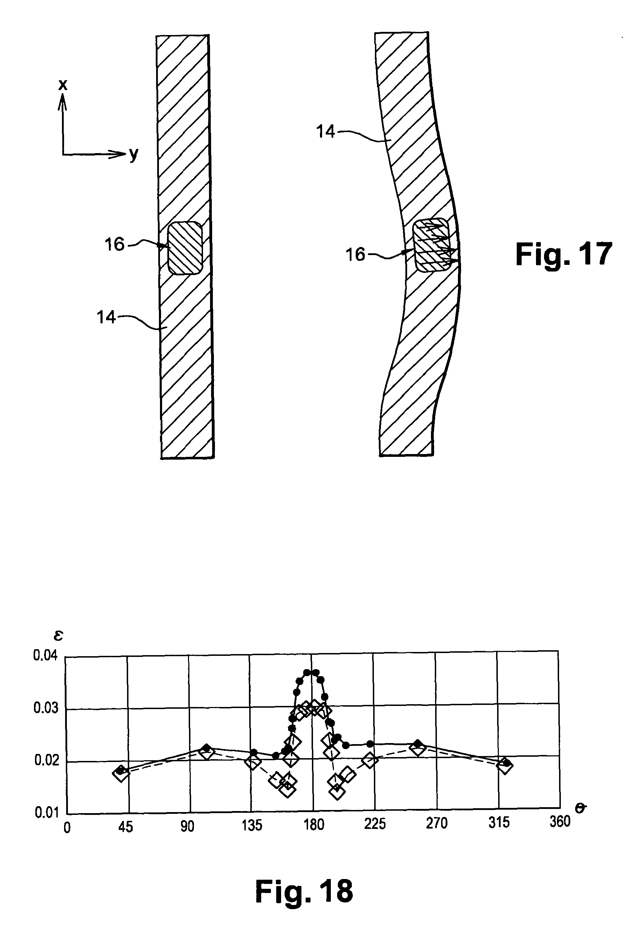

Nous considérons maintenant le cas où le pneumatique est soumis à un effort latéral. Pour cela, on a représenté sur la figure 17 un déroulé de la bande de roulement du pneumatique, lorsqu'il n'est soumis à aucun effort latéral (figure de gauche), et lorsqu'il est soumis à un effort latéral (figure de droite). Sur ce déroulé, on a représenté l'aire de contact de la bande de roulement avec le sol.

Lorsque le pneumatique est soumis à une poussée latérale, l'aire de contact est déportée latéralement, ce qui provoque une flexion sur chant de la partie de la bande de roulement en contact avec le sol. En outre, du fait que les contraintes de cisaillement ne sont pas réparties de manière homogène dans toute l'aire de contact, la partie de sculpture du pneumatique située en sortie de l'aire de contact est plus cisaillée que celle située en entrée. Cela crée un couple autour de l'axe vertical qui correspond au couple d'auto-alignement. Ce couple a tendance à provoquer une rotation de l'aire de contact autour de l'axe vertical, cette rotation provoquant alors une différenciation entre la flexion sur chant en entrée et en sortie de l'aire de contact, comme cela est visible sur la figure 7.

Les effets de ces déformations sur les signaux fournis par les capteurs sont clairement visibles sur la figure 18 pour laquelle on prend l'hypothèse que le pneumatique est soumis à une poussée latérale de 300 daN. On peut analyser les signaux de la façon suivante :

- La poussée latérale s'applique en un point disposé vers l'arrière de l'aire de contact relativement au centre de cette aire de contact de sorte que les signaux fournis par les deux capteurs se distinguent, particulièrement dans l'aire de contact.
- Le signal fourni par l'un des deux capteurs a une plus grande amplitude que le signal fourni par l'autre capteur, ce qui traduit une différence d'extension et donc une flexion sur chant de la bande de roulement du pneumatique.
- Enfin, la différence entre les valeurs des deux signaux en entrée (156°) et en sortie (204°) de l'aire de contact n'est pas la même, ce qui implique une différence de flexion entre l'entrée et la sortie de l'aire de contact. Comme on l'a montré en référence à la figure 17, cette différence de flexion est due à la rotation de l'aire de contact imposée par le couple d'auto-alignement.

Les figures 12 à 18 qui viennent d'être décrites démontrent que, grâce à l'implantation des deux capteurs d'extension dans la bande de roulement du pneumatique, on peut connaître avec précision les déformations subies par le pneumatique. Or, ces déformations sont dues aux efforts appliqués sur le pneumatique qui eux-mêmes sont liés à ses performances d'adhérence. Cela permet donc d'illustrer les raisons pour lesquelles le procédé de l'invention permet effectivement de quantifier l'utilisation d'un potentiel maximal d'adhérence d'un pneumatique en roulage sur un sol, grâce à la mesure de déformations de la bande de roulement.

**Revendications**

1. Procédé de quantification d'une utilisation d'un potentiel d'adhérence maximal d'un pneumatique (10) en roulage sur un sol, **caractérisé en ce que :**

   - on détermine au moins deux valeurs d'une extension différentielle de la bande de roulement (14) du pneumatique (10) ou d'un cisaillement de la bande de roulement homogène à cette extension différentielle (14), en deux azimuts distincts ($\theta_e$, $\theta_s$), et la valeur de l'extension différentielle ou du cisaillement, déterminée en un azimut $\theta$ donné, étant notée $\Delta(\theta)$, on quantifie l'utilisation à l'aide d'une valeur S définie de la manière suivante : où $P_{adh}$, $P_{glis}$ et $O$ sont des constantes prédéterminées, et $\theta_1$ et $\theta_2$ sont les valeurs des deux azimuts distincts.

2. Procédé selon la revendication précédente, dans lequel les deux azimuts ($\theta_e$, $\theta_s$) définissent un secteur angulaire aigu comprenant l'aire de contact (16) de la bande de roulement (14) avec le sol.

3. Procédé selon la revendication précédente, dans lequel le secteur angulaire est de l'ordre de 50 degrés.

$$S = \frac{((\Delta(\theta_1) - \Delta(\theta_2)) - O - P_{glis}.(\Delta(\theta_1) + \Delta(\theta_2))}{(P_{adh} - P_{glis}).(\Delta(\theta_1) + \Delta(\theta_2))}$$

4. Procédé selon l'une quelconque des revendications 1 à 3, dans lequel $P_{glis}$ = 0.

5. Procédé selon l'une quelconque des revendications précédentes, dans lequel la quantification de l'utilisation est en outre fonction d'une longueur ($L_{adc}$) de l'aire de contact (16) de la bande de roulement (14) avec le sol.

6. Procédé selon l'une quelconque des revendications 1 à 5, dans lequel, les valeurs déterminées étant des valeurs de cisaillement, on détermine chaque valeur de cisaillement de la bande de roulement (14), sensiblement dans un plan équatorial du pneumatique.

7. Procédé selon l'une quelconque des revendications 1 à 5, dans lequel l'extension différentielle correspond à la différence entre deux valeurs d'extension ($\varepsilon_1$, $\varepsilon_2$) de la bande de roulement (14) mesurées sensiblement symétriquement par rapport à un plan équatorial du pneumatique.

8. Procédé selon la revendication précédente, dans lequel les valeurs d'extensions ($\varepsilon_1$, $\varepsilon_2$) mesurées sont des valeurs d'extension selon une direction sensiblement circonférentielle au pneumatique.

9. Procédé selon l'une quelconque des revendications précédentes, dans lequel on détermine l'extension ou le cisaillement de la bande de roulement respectivement au moyen d'au moins un capteur d'extension (18, 20) ou de cisaillement, de préférence implanté entre une nappe carcasse et une gomme intérieure du pneumatique ou sur une face de la gomme intérieure en contact avec l'air intérieur au pneumatique.

**Patentansprüche**

1. Verfahren zur Quantifizierung einer Verwendung eines maximalen Haftungspotentials eines Luftreifens (10) beim Fahren auf einem Boden, **dadurch gekennzeichnet, dass**:

   - mindestens zwei Werte einer differentiellen Ausdehnung des Laufstreifens (14) des Luftreifens (10) oder einer Scherbeanspruchung des Laufstreifens gleich dieser differentiellen Ausdehnung (14) in zwei unterschiedlichen Azimuten ($\theta_e$, $\theta_s$) bestimmt werden, und wenn der in einem gegebenen Azimut $\theta$ bestimmte Wert der differentiellen Ausdehnung oder der Scherbeanspruchung mit $\Delta(\theta)$ bezeichnet wird, die Verwendung mit Hilfe eines Werts S quantifiziert wird, der folgendermaßen definiert ist:

$$S = \frac{((\Delta(\theta_1) - \Delta(\theta_2)) - O - P_{glis}.(\Delta(\theta_1) + \Delta(\theta_2))}{(P_{adh} - P_{glis}).(\Delta(\theta_1) + \Delta(\theta_2))}$$

wobei $P_{adh}$, $P_{glis}$ und 0 vorbestimmte Konstanten sind, und $\theta_1$ und $\theta_2$ die Werte der zwei unterschiedlichen Azimute sind.

2. Verfahren nach dem vorhergehenden Anspruch, wobei die zwei Azimute ($\theta_e$, $\theta_s$) einen spitzen Winkelsektor definieren, der den Kontaktbereich (16) des Laufstreifens (14) mit dem Boden enthält.

3. Verfahren nach dem vorhergehenden Anspruch, wobei der Winkelsektor in der Größenordnung von 50 Grad liegt.

4. Verfahren nach einem der Ansprüche 1 bis 3, wobei gilt $P_{glis}$ = 0.

5. Verfahren nach einem der vorhergehenden Ansprüche, wobei die Quantifizierung der Verwendung außerdem von einer Länge ($L_{adc}$) des Kontaktbereichs (16) des Laufstreifens (14) mit dem Boden abhängt.

6. Verfahren nach einem der Ansprüche 1 bis 5, wobei, wenn die bestimmten Werte Scherwerte sind, jeder Scherwert des Laufstreifens (14) im Wesentlichen in einer Äquatorialebene des Luftreifens bestimmt wird.

7. Verfahren nach einem der Ansprüche 1 bis 5, wobei die differentielle Ausdehnung der Differenz zwischen zwei Ausdehnungswerten ($\varepsilon_1$, $\varepsilon_2$) des Laufstreifens (14) entspricht, die im Wesentlichen symmetrisch bezüglich einer Äquatorialebene des Luftreifens gemessen werden.

8. Verfahren nach dem vorhergehenden Anspruch, wobei die gemessenen Ausdehnungswerte ($\varepsilon_1$, $\varepsilon_2$) Ausdehnungswerte im Wesentlichen in einer Umfangsrichtung des Luftreifens sind.

9. Verfahren nach einem der vorhergehenden Ansprüche, wobei die Ausdehnung oder die Scherbeanspruchung des Laufstreifens mittels mindestens eines Ausdehnungssensors (18, 20) bzw. Scherbeanspruchungssensors bestimmt wird, der vorzugsweise zwischen einer Karkassenlage und einem Innengummi des Luftreifens oder auf einer Seite des Innengummis in Kontakt mit der Luft im Inneren des Luftreifens eingesetzt wird.

## Claims

1. A method of quantifying the utilization of a maximum grip potential of a tire (10) running on the ground, **characterized in that** it comprises the following steps:

    · determining at least two values for a differential extension of the tread (14) of the tire (10) or for a shear of the tread (14) that is homogeneous with said differential extension, respectively at two distinct azimuth angles ($\theta_e$, $\theta_s$); and
    · the value of the differential extension or of the shear, as determined at a given azimuth angle $\theta$ being written $\Delta(\theta)$, quantifying said utilization with the help of a value S that is defined as follows:

$$S = \frac{(\,(\Delta(\theta_1) - \Delta(\theta_2)\,) - O - P_{slip}.(\Delta(\theta_1) + \Delta(\theta_2)\,)}{(P_{grip} - P_{slip}) . (\Delta(\theta_1) + \Delta(\theta_2)\,)}$$

    where $P_{grip}$, $P_{slip}$, and 0 are predetermined constants, and $\theta_1$ and $\theta_2$ are the two distinct azimuth angle values.

2. A method according to claim 1, in which the two azimuth angles ($\theta_e$, $\theta_s$) define an acute-angule sector containing the contact area (16) of the tread (14) with the ground.

3. A method according to claim 2, in which the angular sector is about 50°.

**4.** A method according to any one of claims 1 to 3, in which $P_{slip} = 0$.

**5.** A method according to any one of previous claims, in which the quantification of said utilization is also a function of a length ($L_{ca}$) of the contact area (16) of the tread (14) with the ground.

**6.** A method according to any one of claims 1 to 5, in which, when the determined values are shear values, each shear value of the tread (14) is determined substantially in an equatorial plane of the tire.

**7.** A method according to any one of claims 1 to 5, in which the differential extension corresponds to the difference between two extension values ($\varepsilon_1$, $\varepsilon_2$) of the tread (14) measured substantially symmetrically about an equatorial plane of the tire.

**8.** A method according to the previous claim, in which the measured extension values ($\varepsilon_1$, $\varepsilon_2$) are extension values in a direction that is substantially circumferential relative to the tire.

**9.** A method according to any one of previous claims, in which the extension or the shear of the tread is determined respectively by means of at least one extension (18, 20) or shear sensor, preferably implanted between a carcass ply and inside rubber of the tire or on a face of the inside rubber that is in contact with the air inside the tire.

**Fig. 1**

$$y=3E\text{-}05x+0{,}0003$$

**Fig. 2**

$$y=7E\text{-}06x-0{,}0006$$

$$y=7E\text{-}07x-0{,}0007$$

**Fig. 3**

**Fig. 4**

**Fig. 5**

**Fig. 6**

**Fig. 7**

Fig. 8

Fig. 9

Fig. 10

Fig. 11

**Fig. 12**

**Fig. 13**

**Fig. 14**

# Fig. 15

# Fig. 16

Fig. 17

Fig. 18

**EP 1 953 052 B1**

## RÉFÉRENCES CITÉES DANS LA DESCRIPTION

**Documents brevets cités dans la description**

- WO 03066400 A